# EUROPÄISCHE PATENTANMELDUNG

(11) **EP 2 476 714 A1**
(43) Veröffentlichungstag der Anmeldung: **18.07.2012**
(21) Anmeldenummer: 11150844.6
(22) Anmeldetag: 13.01.2011
(51) Int. Cl.: C08G 18/48, C08G 18/76, C08L 75/08, C08J 9/00

(54) **Polyurethanintegralschaumstoffe mit verbesserter Oberflächenhärte**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft Polyurethanformkörper mit hoher Oberflächenhärte, die hergestellt werden können durch Vermischen von (a) organischem Polyisocyanat mit (b) Polyol, (c) Wasserabsorbierendes Polymer, (d) Treibmittel Wasser, gegebenenfalls (e) Katalysator, gegebenenfalls (f) Kettenverlängerungsmittel und/oder Vernetzungsmittel, und gegebenenfalls (g) sonstigen Hilfsmitteln und/oder Zusatzstoffen zu einer Reaktionsmischung, Einbringen der Reaktionsmischung in eine Form und Ausreagieren lassen der Reaktionsmischung zum Polyurethanformkörper.

## Beschreibung

Die vorliegende Erfindung betrifft Polyurethanformkörper mit hoher Oberflächenhärte, die hergestellt werden können durch Vermischen von (a) organischem Polyisocyanat mit (b) Polyol, (c) wasserabsorbierendes Polymer, (d) Treibmittel Wasser, gegebenenfalls (e) Katalysator, gegebenenfalls (f) Kettenverlängerungsmittel und/oder Vernetzungsmittel, und gegebenenfalls (g) sonstigen Hilfsmitteln und/oder Zusatzstoffen zu einer Reaktionsmischung, Einbringen der Reaktionsmischung in eine Form und Ausreagieren lassen der Reaktionsmischung zum Polyurethanformkörper.

Zur Herstellung von Polyurethanintegralschaumstoffen wurden zur Erzeugung einer stabilen Haut sowie einer ausgeprägten Integralstruktur bei gegebener mittlerer Dichte niedrig siedende physikalische Treibmittel eingesetzt. Beispiele dieser niedrig siedenden Treibmittel sind halogenierte Kohlenstoffe bzw. Kohlenwasserstoffe, Alkane, wie n-Pentan, iso-Pentan, Cyclopentan oder iso-Hexan, sowie Ketone, beispielsweise Aceton, oder Ether. Mittlerweise sind halogenierte Kohlenstoffe bzw. halogenierte Kohlenwasserstoffe aufgrund ihres umweltschädlichen Verhaltens zum überwiegenden Teil verboten. Nachteile der Alkane, Ketone und Ether sind deren hohe Brennbarkeit. Diese erfordert eine explosionsgeschützte Verarbeitung. Weiter führt die hohe Brennbarkeit der Treibmittel auch zu einer erhöhten Brennbarkeit der erhaltenen Polyurethane. Die Herstellung solcher Polyurethanintegralschaumstoffe ist beispielsweise in DE 3430285, US 3178490, DE 2544560 und US 3182104 beschrieben.

Ein umweltfreundliches Treibmittel ist das chemische Treibmittel Wasser. Dabei entsteht bei dem Einsatz chemischer Treibmittel durch die Reaktion mit Isocyanat das Treibgas Wasser. Nachteilig bei dem Einsatz von chemischen Treibmitteln aber ist die schlechte Ausbildung einer stabilen Haut sowie die unzureichende Ausbildung einer Integralstruktur im Schaumstoff. Dies macht sich durch geringe mechanische Stabilität des Integralschaumstoffs sowie durch eine geringe Oberflächenhärte bemerkbar.

DE 10359075 beschreibt, dass die Oberflächenhärte eines Polyurethanintegralschaumstoffs durch die Zugabe von anorganischen Zeolithen verbessert werden kann. Nachteilig an der Verwendung von anorganischen Zeolithen ist, dass diese fest sind und dadurch bei der Herstellung der Polyurethane zu erhöhtem Verschleiß führen.

Aufgabe der vorliegenden Erfindung war es daher, einen Polyurethanintegralschaumstoff zu liefern, der eine harte und stabile Haut sowie eine ausgeprägte Integralstruktur aufweist.

Diese Aufgabe wird gelöst durch einen Polyurethanformkörper mit hoher Oberflächenhärte, der erhalten wird durch Vermischen von (a) organischem Polyisocyanat mit (b) Polyol, (c) wasserabsorbierende Polymere, (d) Treibmittel Wasser, gegebenenfalls (e) Katalysator, gegebenenfalls (f) Kettenverlängerungsmittel und/oder Vernetzungsmittel, und gegebenenfalls (g) sonstigen Hilfsmitteln und/oder Zusatzstoffen zu einer Reaktionsmischung, Einbringen der Reaktionsmischung in eine Form und Ausreagieren lassen der Reaktionsmischung zum Polyurethanformkörper.

Dabei handelt es sich bei einem erfindungsgemäßen Polyurethanformkörper vorzugsweise um einen Polyurethanintegralschaumstoff. Als Polyurethanintegralschaumstoffe im Sinn der Erfindung werden Polyurethan-Schaumstoffe nach DIN 7726 mit einer Randzone, die bedingt durch den Formgebungsprozess eine höhere Dichte als der Kern aufweist, verstanden. Die über den Kern und die Randzone gemittelte Gesamtrohdichte liegt dabei vorzugsweise über 0,08 g/cm³, besonders bevorzugt von 0,10 bis 0,75 g/cm³ und insbesondere von 0,15 bis 0,50 g/cm³. Vorzugsweise handelt es sich bei den Polyurethanintegralschaumstoffen um Polyurethanintegralhartschaumstoffe. Als Polyurethanintegralhartschaumstoffe werden dabei solche bezeichnet, die eine Reißdehnung von maximal 50%, bevorzugt maximal 30%, besonders bevorzugt von maximal 20% und insbesondere von maximal 15 % nach DIN 53432 aufweisen. Im Dreipunkt-Biegeversuch nach DIN 53432 weisen Polyurethanintegralhartschaumstoffe vorzugsweise eine Durchbiegung bei Bruch von weniger als 40 mm, besonders bevorzugt weniger als 30 mm auf. Die Herstellung von Polyurethanformkörpern ist allgemein bekannt und beispielsweise im "Kunststoffhandbuch, Band 7, Polyurethane", Carl Hanser Verlag, 3. Auflage 1993, Kapitel 7 beschrieben.

Die zur Herstellung der erfindungsgemäßen Polyurethanformkörper verwendeten organischen und/oder modifizierten Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Metandiphenyldiisocyanat, 2,4'-Metandiphenyldiisocyanat, die Mischungen aus monomeren Metandiphenyldiisocyanaten und höherkernigen Homologen des Metandiphenyldiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt werden Isocyanate aus der Diphenylmethanreihe, wie 4,4'-MDI, 2,4'-MDI sowie Polymer-MDI verwendet. Dabei können auch geringe Mengen, beispielsweise bis etwa 20 Gew.%, allophanat-, carbodiimid- oder uretoniminmodifizierte Polyisocyanate enthalten. Weiter können die Isocyanate auch in Form von Isocyanatprepolymeren eingesetzt werden. Diese werden beispielsweise erhalten wenn Isocyanate (a-1) im Überschuss mit Polyole und/oder Kettenverlängerern umgesetzt werden. Dabei können als Polyole und Kettenverlängerer vorzugsweise die unter (b) und (c) beschriebenen Substanzen eingesetzt werden. Die Prepolymere weisen vorzugsweise einen NCO-Gehalt von 14 bis 32, besonders bevorzugt von 22 bis 30 Gew.-% auf.

Als Polyole b) werden vorzugsweise Polyetherole und/oder Polyesterole, besonders bevorzugt Polyetherole eingesetzt. Diese weisen mindestens zwei gegenüber Isocyanaten reaktive Wasserstoffatome, vorzugsweise in Form von -OH-Gruppen, ein Molekulargewicht von mindestens 200 g/mol, vorzugsweise ein zahlenmittleres Molekulargewicht von 225 bis 12.000 g/mol, bevorzugt 250 bis 2000 g/mol besonders bevorzugt 275 bis 1500 g/mol und insbesondere 300 bis 1000 G/mol und eine mittlere Funktionalität von 1,7 bis 8, bevorzugt 2,0 bis 6, besonders bevorzugt 2,5 bis 5 und insbesondere 3 bis 4,5 auf.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise, 1,3-Propylenoxid, 1,2- bzw. 2,3-Butylenoxid und vorzugsweise Ethylenoxid und 1,2-Propylenoxid. Des Weiteren kann Tetrahydrofuran Monomer eingesetzt werden. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen beispielsweise Wasser oder 2- bis 8-wertige Alkohole, wie Ethylenglykol, 1,2- und 1,3-Propandiol, Diethylenglykol, Dipropylenglykol, 1,4-Butandiol, Glycerin, Trimethylolpropan, Rohrzucker, Hexite, wie Sorbit, oder mehrwertige Amine, wie Ethylendiamin, in Betracht.

Die Polyetherpolyole, vorzugsweise Polyoxypropylen-polyoxyethylen-polyole, besitzen vorzugsweise eine Funktionalität von 1,7 bis 6, besonders bevorzugt 2,5 bis 5 und insbesondere 3 bis 4,5 und zahlenmittlere Molekulargewichte von 250 bis 2000 g/mol besonders bevorzugt 275 bis 1500 g/mol und insbesondere 300 bis 1000 G/mol und eine mittlere Funktionalität von 1,7 bis 8, bevorzugt 2,0 bis 6, besonders bevorzugt 2,5 bis 5 und insbesondere 3 bis 4,5.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. w-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1:1,05 bis 1,2 polykondensiert.

Die erhaltenen Polyesterpolyole besitzen vorzugsweise eine Funktionalität von 2 bis 4, insbesondere von 2 bis 3, und ein zahlenmittleres Molekulargewicht von 300 bis 3000, vorzugsweise 500 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im Allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, bevorzugt Acrylnitril und Styrol verwendet. Die Monomere werden gegebenenfalls in Gegenwart weiterer Monomere, eines Makromers, d.h. eines ungesättigten, radikalisch polymerisierbaren Polyols, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Wasserabsorbierende Polymere (c) sind insbesondere Polymere aus (co)polymerisierten hydrophilen Monomeren wie zum Beispiel teilneutralisierte Acrylsäure, 2-Hydroxyethylmethacrylat und 2-Hydroxyethylacrylat, Pfropf(co)polymere von einem oder mehreren hydrophilen Monomeren auf einer geeigneten Pfropfgrundlage, vernetzte Cellulose- oder Stärkeether, vernetzte Carboxymethylcellulose, teilweise vernetztes Polyalkylenoxid, teilweise vernetzten Polyvinylpyrrolidon bzw. Polyvinylpyrrolidoncopolymerisaten oder in wässrigen Flüssigkeiten quellbare Naturprodukte, wie beispielsweise Guarderivate oder Bentonite, wobei wasserabsorbierende Polymere (f) auf Basis teilneutralisierter Acrylsäure bevorzugt werden. Solche Polymere werden als absorbierende Produkte zur Herstellung von Windeln, Tampons, Damenbinden und anderen Hygieneartikeln, aber auch als wasserzurückhaltende Mittel im landwirtschaftlichen Gartenbau verwendet. In einer bevorzugten Ausführungsform enthält das wasserabsorbierende Polymer (c) teilneutralisierte Polyacrylsäure oder deren Copolymere.

Die Herstellung der wasserabsorbierenden Polymere (c) wird beispielsweise in der Monographie "Modern Superabsorbent Polymer Technology", F.L. Buchholz und A.T. Graham, Wiley-VCH, 1998, oder in Ullmann's Encyclopedia of Industrial Chemistry, 6. Auflage, Band 35, Seiten 73 bis 103, beschrieben. Das bevorzugte Herstellungsverfahren ist die Lösungs- oder Gelpolymerisation. Bei dieser Technologie wird zunächst eine Monomermischung hergestellt, die diskontinuierlich neutralisiert und dann in einen Polymerisationsreaktor überführt wird, oder bereits im Polymerisationsreaktor vorgelegt wird. Im sich anschließenden diskontinuierlichen oder kontinuierlichen Verfahren erfolgt die Reaktion zum Polymergel, das im Falle einer gerührten Polymerisation bereits zerkleinert wird. Das Polymergel wird anschließend getrocknet, gemahlen und gesiebt und dann zur weiteren Oberflächenbehandlung transferiert.

Die wasserabsorbierenden Polymere werden in einer weiteren bevorzugten Ausführungsform durch Polymerisation einer Monomerlösung, enthaltend
aa) mindestens eine ethylenisch ungesättigte Carbonsäure und/oder Sulfonsäure,
bb) mindestens einen Vernetzer,
cc) wahlweise ein oder mehrere mit dem Monomeren aa) copolymerisierbare ethylenisch und/oder allylisch ungesättigte Monomere und
dd) wahlweise ein oder mehrere wasserlösliche Polymere, auf die die Monomere aa), bb) und ggf. cc) zumindest teilweise aufgepfropft werden können,
erhalten.

Geeignete ethylenisch ungesättigte Carbonsäuren bzw. Sulfonsäuren aa) sind beispielsweise Acrylsäure, Methacrylsäure, Maleinsäure, Fumarsäure, Crotonsäure, 4-Pentensäure, 2-Acrylamid-2-methylpropansulfonsäure, Vinylsulfonsäure, 3-Allyoxy-2-hydroxypropan-1-sulfonat und Itaconsäure. Besonders bevorzugte Monomere sind Acrylsäure und Methacrylsäure. Ganz besonders bevorzugt ist Acrylsäure.

Die Monomere aa), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 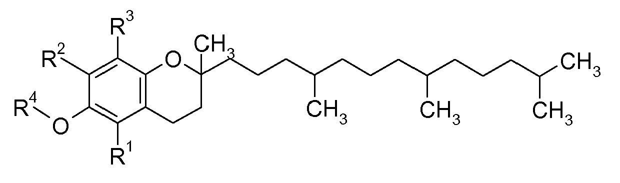 wobei R¹ Wasserstoff oder Methyl, R² Wasserstoff oder Methyl, R³ Wasserstoff oder Methyl und R⁴ Wasserstoff oder ein Säurerest mit 1 bis 20 Kohlenstoffatomen bedeutet.

Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein. Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindestens 10 Gew.-ppm, besonders bevorzugt mindestens 30 Gew.-ppm, insbesondere um 50 Gew.-ppm, Hydrochinonhalbether, jeweils bezogen auf Acrylsäure, wobei Acrylsäuresalze als Acrylsäure mit berücksichtigt werden. Beispielsweise kann zur Herstellung der Monomerlösung eine Acrylsäure mit einem entsprechenden Gehalt an Hydrochinonhalbether verwendet werden.

Die Vernetzer bb) sind Verbindungen mit mindestens zwei polymerisierbaren Gruppen, die in das Polymernetzwerk radikalisch einpolymerisiert werden können. Geeignete Vernetzer bb) sind beispielsweise Ethylenglykoldimethacrylat, Diethylenglykoldiacrylat, Allylmethacrylat, Trimethylolpropantriacrylat, Triallylamin, Tetraallyloxyethan, wie in EP-A 0 530 438 beschrieben, Di- und Triacrylate, wie in EP-A 0 547 847, EP-A 0 559 476, EP-A 0 632 068, WO 93/21237, WO 03/104299, WO 03/104300, WO 03/104301 und DE-A 103 31 450 beschrieben, gemischte Acrylate, die neben Acrylatgruppen weitere ethylenisch ungesättigte Gruppen enthalten, wie in DE-A 103 31 456 und WO 04/013064 beschrieben, oder Vernetzermischungen, wie beispielsweise in DE-A 195 43 368, DE-A 196 46 484, WO 90/15830 und WO 02/32962 beschrieben.

Geeignete Vernetzer bb) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie Trimethylolpropantriacrylat und Allylverbindungen, wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A 0 343 427 beschrieben sind. Weiterhin geeignete Vernetzer bb) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Im erfindungsgemäßen Verfahren einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer bb) sind jedoch Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Ganz besonders bevorzugte Vernetzer bb) sind die mit Acrylsäure oder Methacrylsäure zu Di- oder Triacrylaten veresterten mehrfach ethoxylierten und/oder propoxylierten Glyzerine wie sie beispielsweise in WO 03/104301 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5- fach ethoxylierten und/oder propoxylierten Glyzerins. Am meisten bevorzugt sind die Triacrylate des 3- bis 5-fach ethoxylierten und/oder propoxylierten Glyzerins. Diese zeichnen sich durch besonders niedrige Restgehalte (typischerweise unter 10 Gew.-ppm) im wasserabsorbierenden Polymer aus und die wässrigen Extrakte der damit hergestellten wasserabsorbierenden Polymere weisen eine fast unveränderte Oberflächenspannung (typischerweise mindestens 0,068 N/m) im Vergleich zu Wasser gleicher Temperatur auf.

Mit den Monomeren aa) copolymerisierbare ethylenisch ungesättigte Monomere cc) sind beispielsweise Acrylamid, Methacrylamid, Crotonsäureamid, Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Als wasserlösliche Polymere dd) können Polyvinylalkohol, Polyvinylpyrrolidon, Stärke, Stärkederivate, Polyglykole, insbesondere zwei- und dreiwertige Polyole auf Basis von Ethylenoxyd und/oder Propylenoxid, oder Polyacrylsäuren, vorzugsweise Polyvinylalkohol, Polyglykole und Stärke, eingesetzt werden.

Die bevorzugten Polymerisationsinhibitoren benötigen für eine optimale Wirkung gelösten Sauerstoff. Üblicherweise werden die Monomerlösungen vor der Polymerisation weitgehend von Sauerstoff befreit (Inertisierung), beispielsweise mittels Durchströmen mit einem inerten Gas, vorzugsweise Stickstoff. Dadurch werden die Polymerisations-inhibitoren in ihrer Wirkung deutlich abgeschwächt. Vorzugsweise wird der Sauerstoffgehalt der Monomerlösung vor der Polymerisation auf weniger als 1 Gew.-ppm, besonders bevorzugt auf weniger als 0,5 Gew.-ppm, gesenkt.

Die Herstellung eines geeigneten Grundpolymers sowie weitere geeignete hydrophile ethylenisch ungesättigte Monomere dd) werden in DE-A 199 41 423, EP-A 0 686 650, WO 01/45758 und WO 03/104300 beschrieben.

Wasserabsorbierende Polymere werden üblicherweise durch Polymerisation einer wässrigen Monomerlösung und wahlweise einer anschließenden Zerkleinerung des Hydrogels erhalten. Geeignete Herstellverfahren sind in der Literatur beschrieben. Wasserabsorbierende Polymere können beispielsweise erhalten werden durch
- Gelpolymerisation im Batchverfahren bzw. Rohrreaktor und anschließender Zerkleinerung im Fleischwolf, Extruder oder Kneter (EP-A 0 445 619, DE-A 198 46 413)
- Polymerisation im Kneter, wobei durch beispielsweise gegenläufige Rührwellen kontinuierlich zerkleinert wird, (WO 01/38402)
- Polymerisation auf dem Band und anschließende Zerkleinerung im Fleischwolf, Extruder oder Kneter (DE-A 38 25 366, US 6,241,928)
- Emulsionspolymerisation, wobei bereits Perlpolymerisate relativ enger Gelgrößenverteilung anfallen (EP-A 0 457 660)
- In-situ Polymerisation einer Gewebeschicht, die zumeist im kontinuierlichen Betrieb zuvor mit wässriger Monomerlösung besprüht und anschließend einer Photopolymerisation unterworfen wurde (WO 02/94328, WO 02/94329)

Die Umsetzung wird vorzugsweise in einem Kneter, wie beispielsweise in WO 01/38402 beschrieben, oder auf einem Bandreaktor, wie beispielsweise in EP-A 0 955 086 beschrieben, durchgeführt.

Die Neutralisation kann auch teilweise nach der Polymerisation auf der Stufe des Hydrogels durchgeführt werden. Es ist daher möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Hydrogels eingestellt wird. Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden. Die Neutralisation der Monomerlösung auf den Endneutralisationsgrad ist bevorzugt.

Das neutralisierte Hydrogel wird dann mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung aber auch ein Wirbelbetttrockner oder ein beheizter Pflugscharmischer verwendet werden. Um besonders weiße Produkte zu erhalten, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, je höher der Feststoffgehalt des Gels ist. Bevorzugt liegt der Feststoffgehalt des Gels vor der Trocknung daher zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem noch akzeptablen Produkt. Vorteilhaft hinsichtlich Farbe und Produktqualität ist in der Regel eine möglichst kurze Trocknungszeit.

Das getrocknete Hydrogel wird vorzugsweise gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 µm, besonders bevorzugt unter 800 µm, ganz besonders bevorzugt unter 600 µm, und vorzugsweise über 10 µm, besonders bevorzugt über 50 µm, ganz besonders bevorzugt über 100 µm.

Ganz besonders bevorzugt ist eine Partikelgröße (Siebschnitt) von 106 bis 850 µm. Die Partikelgröße wird gemäß der von der EDANA (European Disposables and Nonwovens Association) empfohlenen Testmethode Nr. 420.2-02 "Particle size distribution" bestimmt.

Die Grundpolymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyglycidylverbindungen, wie in EP-A 0 083 022, EP-A 0 543 303 und EP-A 0 937 736 beschrieben, di- oder polyfunktionelle Alkohole, wie in DE-C 33 14 019, DE-C 35 23 617 und EP-A 0 450 922 beschrieben, oder β-Hydroxyalkylamide, wie in DE-A 102 04 938 und US 6,239,230 beschrieben.

Des Weiteren sind in DE-A 40 20 780 zyklische Karbonate, in DE-A 198 07 502 2-Oxazolidon und dessen Derivate, wie 2-Hydroxyethyl-2-oxazolidon, in DE-A 198 07 992 Bis- und Poly-2-oxazolidinone, in DE-A 198 54 573 2-Oxotetrahydro-1,3-oxazin und dessen Derivate, in DE-A 198 54 574 N-Acyl-2-Oxazolidone, in DE-A 102 04 937 zyklische Harnstoffe, in DE-A 103 34 584 bizyklische Amidacetale, in EP-A 1 199 327 Oxetane und zyklische Harnstoffe und in WO 03/031482 Morpholin-2,3-dion und dessen Derivate als geeignete Oberflächennachvernetzer beschrieben.

Die Nachvernetzung wird üblicherweise so durchgeführt, dass eine Lösung des Oberflächennachvernetzers auf das Hydrogel oder das trockene Grundpolymerpulver aufgesprüht wird. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer.

Die thermische Trocknung wird vorzugsweise in Kontakttrocknern, besonders bevorzugt Schaufeltrocknern, ganz besonders bevorzugt Scheibentrocknern, durchgeführt. Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

Der Anteil an wasserabsorbierendem Polymer beträgt vorzugsweise 0,05 bis 1 Gew.-%, besonders bevorzugt 0,1 bis 0,5 Gew.-%, bezogen auf das Gesamtgewicht der Komponenten (b) bis (g).

Ferner sind bei der Herstellung von erfindungsgemäßen Polyurethanformkörpern als Treibmittel (d) Wasser zugegen. In einer bevorzugten Ausführungsform wird neben Wasser kein weiteres Treibmittel eingesetzt

Der Gehalt an Wasser beträgt in einer bevorzugten Ausführungsform von 0,1 bis 2 Gew.-%, bevorzugt 0,2 bis 1,5 Gew.-%, besonders bevorzugt 0,3 bis 1,2 Gew.-%, insbesondere 0,4 bis 1 Gew.-%, bezogen auf das Gesamtgewicht der Komponenten (a) bis (g).

Als Katalysatoren (e) zur Herstellung der Polyurethanformkörper werden bevorzugt Verbindungen verwendet, welche die Reaktion der Hydroxylgruppen enthaltenden Verbindungen der Komponente (b) und gegebenenfalls (c) mit den organischen, gegebenenfalls modifizierten Polyisocyanaten (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyldiethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutylzinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt. Vorzugsweise verwendet werden 0,001 bis 5 Gew.-%, insbesondere 0,05 bis 2 Gew.-% Katalysator bzw. Katalysatorkombination (e), bezogen auf das Gewicht der Komponente (b).

Als Kettenverlängerungsmittel und/oder Vernetzungsmittel (f) werden Substanzen mit einem Molekulargewicht von vorzugsweise kleiner 200 g/mol, besonders bevorzugt von 60 bis 200 g/mol eingesetzt, wobei Kettenverlängerer 2 gegenüber Isocyanaten reaktive Wasserstoffatome und Vernetzungsmittel mindestens 3 gegenüber Isocyanat reaktive Wasserstoffatome aufweisen. Diese können einzeln oder bevorzugt in Form von Mischungen eingesetzt werden. Vorzugsweise werden Diole und/oder Triole mit Molekulargewichten kleiner als 200 g/mol, besonders bevorzugt von 60 bis 150 g/mol eingesetzt. In Betracht kommen beispielsweise aliphatische, cycloaliphatische und/oder araliphatische Diole mit 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 2,3-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle.

Besonders bevorzugt werden als Kettenverlängerer (c) Monoethylenglycol, 1,4-Butandiol, Glycerin oder Mischungen davon und insbesondere Monoethylenglycol oder Mischungen, enthaltend Monoethylenglycol, eingesetzt.

Sofern Kettenverlängerungsmittel, Vernetzungsmittel (f) oder Mischungen davon Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) und (f), zum Einsatz.

Vorzugsweise ist die Gesamtfunktionalität der Polyole (b) und der Kettenverlängerungs- und Vernetzungsmittel (f) größer als 2,5, besonders bevorzugt größer als 2,6 und insbesondere größer als 2,75. Die mittlere OH-Zahl der Polyole (b) und der Kettenverlängerungs- und Vernetzungsmittel (f) ist vorzugsweise größer als 300 mg KOH/g, besonders bevorzugt zwischen 320 und 1000 mg KOH/g und insbesondere zwischen 340 und 600 mg KOH/g.

Der Reaktionsmischung zur Herstellung der Polyurethanformkörper können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Gummivulkanistionshilfsmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Als Weichmacher und Hydrolyseschutzmittel kann beispielsweise γ-Butyrolycton eingesetzt werden.

Die Komponenten (a) bis (g) werden zur Herstellung eines erfindungsgemäßen Polyurethanformkörpers in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,8 bis 1 : 1,25, vorzugsweise 1 : 0,9 bis 1 : 1,15 beträgt.

Die erfindungsgemäßen Polyurethanintegralschaumstoffe werden vorzugsweise nach dem oneshot-Verfahren mit Hilfe der Niederdruck- oder Hochdrucktechnik in geschlossenen, zweckmäßigerweise temperierten Formwerkzeugen hergestellt. Die Formwerkzeuge bestehen gewöhnlich aus Metall, z.B. Aluminium oder Stahl. Diese Verfahrensweisen werden beispielsweise beschrieben von Piechota und Röhr in "Integralschaumstoff", Carl-Hanser-Verlag, München, Wien, 1975, oder im "Kunststoff-handbuch", Band 7, Polyurethane, 3. Auflage, 1993, Kapitel 7.

Die Ausgangskomponenten (a) bis (g) werden dazu vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (g) bei Reaktionsumsätzen kleiner 90 %, bezogen auf die Isocyanatgruppen, als Reaktionsmischung bezeichnet.

Zur Herstellung der Polyurethanintegralschaumstoffe wird die Menge der in das Formwerkzeug eingebrachten Reaktionsmischung wird so bemessen, dass die erhaltenen Formkörper aus Integralschaumstoffen eine Dichte von vorzugsweise 0,08 bis 0,75 g/cm³, besonders bevorzugt von 0,15 bis 0,75 g/cm³ und insbesondere von 0,25 bis 0,70 g/cm³ aufweisen. Die Verdichtungsgrade zur Herstellung der erfindungsgemäßen Polyurethanintegralschaumstoffe liegen im Bereich von 1,1 bis 8,5, vorzugsweise von 1,8 bis 7,0.

Dabei werden vorzugsweise die Komponenten (b), (d) und, falls vorhanden, die Komonenten (e) bis (g), zu einer Polyolkomponente vereinigt. Zur Herstellung der Polyurethanreaktionsmischung wird die Polyolkomponente mit den Isocyanaten (a) vermischt. Dabei kann das wasserabsorbierende Polymere (c) in der Polyolkomponente enthalten sein. Alternativ werden das wasserabsorbierende Polymer (c) und das Treibmittel (d) erst zum Zeitpunkt der Herstellung der Reaktionsmischung vereinigt. Dies kann beispielsweise durch Zugabe des wasserabsorbierenden Polymers (c) als Einzelkomponente oder durch Verwendung von mehreren Polyolkomponenten erfolgen, wobei mindestens eine Polyolkomponente kein wasserabsorbierendes Polymer (c) und mindestens eine weitere Polyolkomponente kein Treibmittel Wasser (d) enthält.

Die erfindungsgemäßen Polyurethanformkörper werden vorzugsweise als Stuckersatz, Gehäuseteile,Fensterrahmen,Ski, Verkleidungen oder Dekorteile eingesetzt.

Im Folgenden wird die Erfindung im Rahmen von Beispielen verdeutlicht:

### Beispiele

Zur Herstellung der erfindungsgemäßen Polyurethanintegralhartschaumstoffe gemäß Beispiel 1 bis 3 sowie der Vergleichsbeispiele V1 und V2 wurden die verwendeten Polyole gemäß Tabelle 1 mit Katalysatoren, Stabilisator und Treibmittel verrührt, auf 40 °C temperiert und anschließend mit dem ebenfalls auf 40 °C temperierten Isocyanat vermischt und in einer geschlossenen Form mit und zum Polyurethanhartschaumstoff verschäumt.

Die Zusammensetzung der Reaktionsmischung zur Herstellung der harten Polyurethanschäume gemäß Beispiel 1 bis 6 sowie den Vergleichsbeispielen V1 bis V4 und deren mechanische Eigenschaften sind in der Tabelle 1 angegeben. Die Mengenangaben der Einsatzstoffe sind Gewichtsteile.

**Tabelle 1**

| Beispiel | 1 | 2 | 3 | V1 | V2 |
|---|---|---|---|---|---|
| Polyol1 | 66,5 | 66,5 | 66,5 | 66,5 | 66,5 |
| Polyol 2 | 10 | 10 | 10 | 10 | 10 |
| Polyol 3 | 20 | 20 | 20 | 20 | 20 |
| Zeolith | | | | | 5 |
| Superabsorber | 0,12 | 0,25 | 0,37 | 0 | 0 |
| Wasser | 1,25 | 1,25 | 1,25 | 1,25 | 1,25 |
| Katalysator | 0,75 | 0,75 | 0,75 | 0,75 | 0,75 |
| Stabilisator | 1,5 | 1,5 | 1,5 | 1,5 | 1,5 |
| Isocyanat | 124 | 124 | 124 | 124 | 124 |
| Verhältnis Wasser-Absorber | 10,4 | 5 | 3,4 | 0 | 0,25 |
| Dichte [g/L] | 197,7 | 195,6 | 195,7 | 195,6 | 195,6 |
| Shore A-Härte | 95,5 | 95,7 | 94,3 | 91,0 | 95 |
| Shore D-Härte | 27,2 | 28 | 29,7 | 25,8 | 28,2 |

Dabei wurden folgende Einsatzstoffe verwendet:
- Polyol 1:: Glycerol initiiertes Polyetherol, Funktionalität = 3, OH-Zahl = 400 mg KOH/g
- Polyol 2:: Zuckerbasiertes Polyetherol, Funktionalität = 4,34, OH-Zahl = 490 mg KOH/g,
- Polyol 3:: Ethylendiamin -basiertes Polyetherol, Funktionalität = 3,93, OHZ = 470 mg KOH/g,
- Isocyanat:: polymeres Methylendiphenyldiisocyanat (PMDI), Viskosität = 200 mPas, (Lupranat® M 20 S der BASF AG)
- Stabilisator:: siliconhaltiger Schaumstabilisator
- Katalysator:: N-Methylimidazol,
- Superabsorber:: vernetzte Natriumpolyacrylatpartikel, erhältlich als Luquasorb®1161 der BASF SE
- Zeolith:: Baylith® L-Paste

Tabelle 1 zeigt, dass erfindungsgemäße Polyurethanformschaumstoffe eine ausgeprägte harte und stabile Haut aufweisen.

## Patentansprüche

1. Verfahren zur Herstellung eines Polyurethanformkörpers, bei dem man
a) organisches Polyisocyanat mit
b) Polyol,
c) wasserabsorbierendes Polymer,
d) Treibmittel Wasser,
e) gegebenenfalls Katalysator,
f) gegebenenfalls Kettenverlängerungs- und/oder Vernetzungsmittel und
g) gegebenenfalls sonstigen Hilfsmitteln und/oder Zusatzstoffen,
zu einer Reaktionsmischung vermischt, die Reaktionsmischung in eine Form einbringt und zum Polyurethanformkörper ausreagieren lässt.

2. Verfahren nach Anspruch 1, **dadurch gekennzeichnet, dass** die Komponente c) teilneutralisierte Polyacrylsäure oder deren Copolymere enthält.

3. Verfahren nach Anspruch 1 oder 2, **dadurch gekennzeichnet, dass** der Gehalt an wasserabsorbierendem Polymer (c) 0,05 bis 1,0 Gew.-%, bezogen auf das Gesamtgewicht der Komponenten (b) bis (g), beträgt.

4. Verfahren nach einem der Ansprüche 1 oder 2, **dadurch gekennzeichnet, dass** der Polyurethanformkörper ein Polyurethanintegralhartschaumstoff ist.

5. Polyurethanformkörper, erhältlich nach einem der Ansprüche 1 bis 4.

6. Polyurethanformkörper nach Anspruch 5, **dadurch gekennzeichnet, dass** es der Polyurethanformkörper ein Polyurethanintegralhartschaumstoff ist.
